# EUROPEAN PATENT APPLICATION

(11) **EP 2 523 422 A1**
(43) Date of publication of application: **14.11.2012**
(21) Application number: 10841975.5
(22) Date of filing: 24.12.2010
(51) Int. Cl.: H04L 29/08

(54) **ISSUING METHOD AND SYSTEM FOR CONFIGURATION INFORMATION**

(30) Priority: 06.01.2010 CN 201010001485
(71) Applicant: ZTE Corporation, Shenzhen, Guangdong 518057 (CN)
(72) Inventor: PENG, Yonglin, Guangdong 518057 (CN); HAO, Zhenwu, Guangdong 518057 (CN); WANG, Wei, Guangdong 518057 (CN); HU, Xuechuan, Guangdong 518057 (CN)
(74) Representative: Carangelo, Pierluigi
(86) International application number: PCT/CN2010/080221
(87) International publication number: WO 2011/082632

(57) **Abstract**

The disclosure discloses an issuing method and an issuing system for configuration information, wherein the method comprises: a configuration server issuing the modified configuration information to a peer node which serves as a bootstrap node in the Peer-to-Peer (P2P) network when it is determined that the configuration information of a P2P network is modified; and the bootstrap node issuing the configuration information to peer nodes other than the bootstrap node in the P2P network. By the disclosure, the configuration information of the peer nodes in a P2P network can synchronize with that of a configuration server in time.

## Description

### Field of the Invention

The disclosure relates to the technical field of network and communication technologies, and in particular to an issuing method and an issuing system for configuration information in a Peer-to-Peer network.

### Background of the Invention

A Peer to Peer (P2P) network is a distributed network in which participators share resources and services with each other. Generally, the share of resources and services includes: the share and exchange of information, the share of computing resources (e.g. CPU), the share of storage resources (e.g. cache and disk space) and so on. The shared resources and services can be accessed by any peer node in the network. Each participator of the P2P network plays both the role of a resource and service server and the role of a resource and service client.

Resource Locate And Discovery (RELOAD) is an RELOAD protocol of a P2P network defined by an IETF Peer To Peer Session Initiation Protocol (P2PSIP) workgroup. Specifically, the terms involved in an RELOAD network are defined as follows:
a node ID is the unique identifier of each node in a P2P network;
a configuration server can provide configuration information, such as the address of a certificate server, the address of a bootstrap node, the algorithms applied by the network, the limitation to the size of a message and other public configuration information, for the whole network; and
a bootstrap node has a public network IP and can be directly connected with another peer node, and is a peer node providing a bootstrap service for the addition of a new peer node; moreover, the address of the bootstrap node is set in the configuration information of a configuration server.

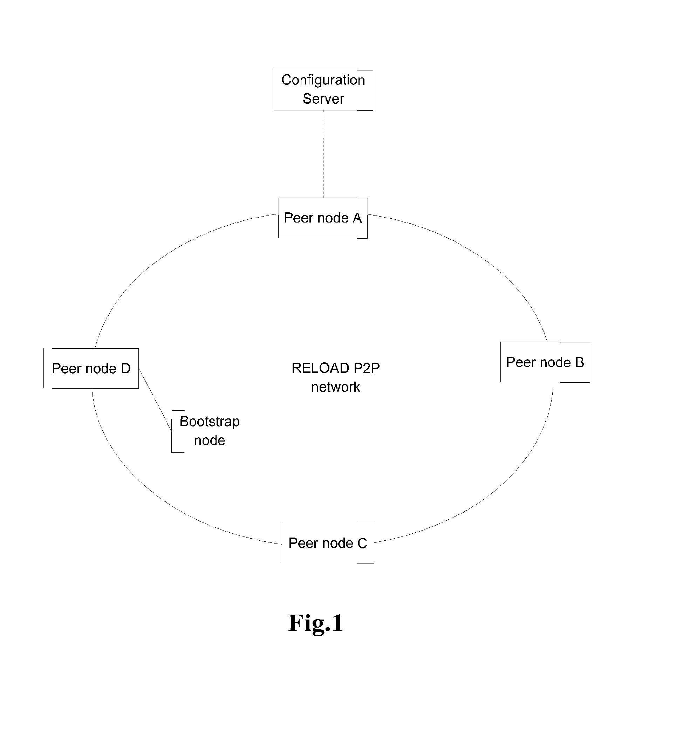

Fig. 1 is a schematic diagram of an existing RELOAD P2P network. As shown in Fig. 1, the RELOAD P2P network consists of peer nodes (A, B, C and D), a configuration server and so on, wherein the configuration server provides the configuration information for the whole network, the node D is a bootstrap node, which may provide bootstrap services for adding another node into the P2P network.

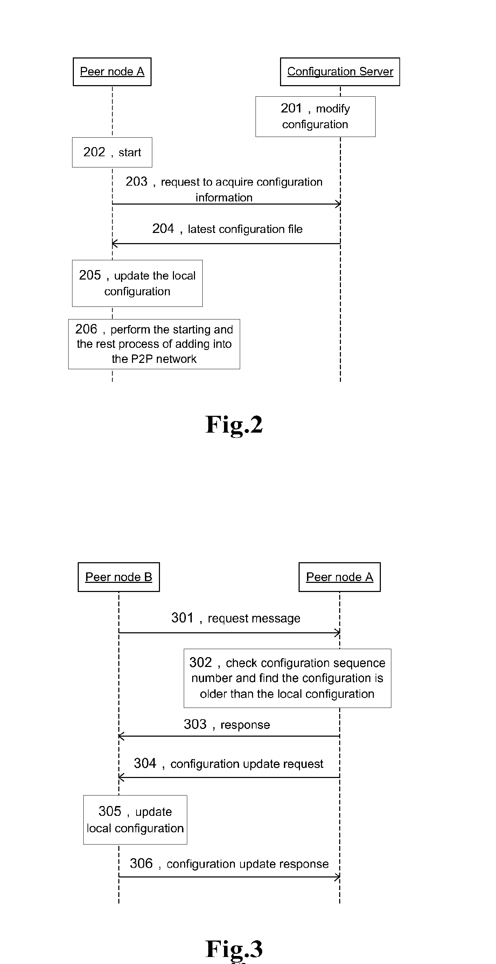

At present, after the configuration information of a configuration server is modified, the modified configuration information can not be updated immediately to each peer node in the P2P network, and contrarily the latest configuration information is not acquired from the configuration server until a peer node in the P2P network is started. By taking the peer node A shown in Fig. 1 as an example, Fig. 2 is a flowchart of acquiring the configuration information from the configuration server when the peer node A is started, as shown in Fig. 2, which mainly comprises the following steps.

Step 201: the configuration of the configuration server is modified;

Step 202: the peer node A is started;

Step 203: the peer node A acquires configuration information from the configuration server in an HTTP GET manner;

Step 204: the configuration server returns an XML configuration file;

Step 205: the peer node A updates the local configuration with the acquired configuration information; and

Step 206: the peer node A performs the rest of the process of adding into the P2P network.

When interacting with other peer nodes, the peer nodes which have acquired the latest configuration information send the latest configuration information to the other peer nodes. By taking Fig. 1 as an example, assuming that the latest configuration information exists in the peer node A and the version of the configuration information of the node B is relatively old, Fig. 3 is a flowchart of broadcasting the latest configuration information from the node A to the node B, as shown in Fig. 3, which mainly comprises the following steps.

Step 301; the peer node B sends a message (any message in the RELOAD) to the peer node A;

Step 302:after receiving the message from the node B, the peer node A checks the configuration sequence number within the message, and then determines the configuration of the node B is old and needs updating if the configuration sequence number within the message is smaller than that of the peer node A;

Step 303: the peer node A returns a message response to the node B to prompt to the node B that the configuration of the node B is not new configuration;

Step 304: the peer node A sends the new configuration information to the node B to inform the node B to update the configuration;

Step 305: the peer node B updates the local configuration according to the configuration information received from the node A;

Step 306: the peer node B returns a configuration update response to the node A.

It can be seen from the above procedure that after the configuration information of the configuration server is modified, the new configuration information cannot be issued to the peer nodes in the P2P network unless there is a new node added into the P2P network, that is, the new configuration information cannot be issued at all if there is no new node added into the P2P network for a long time, thus leading to an inconsistency between the configuration information of the configuration server and that of the peer nodes.

### Summary of the Invention

The disclosure is to provide an issuing method and an issuing system for configuration information to solve at least the above problem.

According with an aspect of the disclosure, there is provided an issuing method for configuration information, which comprises: a configuration server issuing the modified configuration information to a peer node which serves as a bootstrap node in a Peer-to-Peer (P2P) network when it is determined that the configuration information of the P2P network is modified; and the bootstrap node issuing the configuration information to peer nodes other than the bootstrap node in the P2P network.

Further, the step of the configuration server issuing the configuration information to the bootstrap node comprises: the configuration server acquiring the identifier information of the bootstrap node from the configuration information; and the configuration server issuing the configuration information to the bootstrap node in the P2P network according to the identifier information.

Further, the step of the configuration server issuing the configuration information to the bootstrap node in the P2P network comprises: the configuration server sending a notification message to the bootstrap node to notify the bootstrap node that the configuration information has been updated; after receiving the notification message, the bootstrap node sending a configuration information acquisition request to the configuration server; and after receiving the request, the configuration server sending the configuration information to the bootstrap node.

Further, the step of the configuration server issuing the configuration information to the bootstrap node comprises: the configuration server sending a configuration update request to the bootstrap node, wherein the configuration information is carried in the configuration update request.

Further, the step of the bootstrap node issuing the configuration information to the other peer nodes comprises: the bootstrap node sending the configuration information to the other peer nodes in a broadcast manner.

Further, the step of the bootstrap node sending the configuration information to the other peer nodes comprises: the bootstrap node receiving messages from the other peer nodes, wherein the sequence numbers of the local configuration information of the other peer nodes are carried in the messages; and the bootstrap node determining, according to the sequence numbers, that the local configuration information of the other peer nodes needs updating, and then sending a configuration update message to the other peer nodes, wherein the configuration information from the configuration server is carried in the configuration update message.

According with another aspect of the disclosure, there is provided another issuing method for configuration information, which comprises: a peer node which serves as a bootstrap node in a P2P network periodically sending a configuration information acquisition request to a configuration server according to a predetermined period; after receiving the request, the configuration server sending the configuration information of the configuration server to the bootstrap node; and when determining that the local configuration information is older than the configuration information from the configuration server, the bootstrap node issuing the configuration information from the configuration server to peer nodes other than the bootstrap node in the P2P network.

Further, the step of the bootstrap node issuing the configuration information from the configuration server to the other peer nodes comprises: the bootstrap node issuing the configuration information from the configuration server to the other peer nodes in a broadcast manner.

Further, the step of the bootstrap node issuing the configuration information from the configuration server to the other peer nodes comprises: the bootstrap node receiving messages from the other peer nodes, wherein the sequence numbers of the local configuration information of the other peer nodes are carried in the messages; and the bootstrap node determining, according to the sequence numbers, that the local configuration information of the other peer nodes needs updating, and then sending a configuration update message to the other peer nodes, wherein the configuration information from the configuration server is carried in the configuration update message.

According with another aspect of the disclosure, there is provided an issuing system for configuration information, which comprises: a configuration server and a peer node serving as a bootstrap node in a P2P network, wherein the configuration server comprises: a determining module configured to determine that the configuration information of the P2P network is modified and to trigger a first issuing module; and the first issuing module configured to send the modified configuration information to the bootstrap node; and wherein the bootstrap node comprises: a receiving module configured to receive the configuration information from the configuration server; and a second issuing module configured to issue the configuration information received by the receiving module to peer nodes other than the bootstrap node in the P2P network.

Further, the first issuing module comprises: an acquiring unit configured to acquire the identifier information of the bootstrap node from the configuration information; a first sending unit configured to send according to the identifier information a notification message to the bootstrap node to notify the bootstrap node that the configuration information has been updated; a receiving unit configured to receive a configuration information acquisition request returned by the bootstrap node and to trigger a second sending unit; and the second sending unit configured to send the configuration information to the bootstrap node.

Further, the first issuing module comprises: an acquiring unit configured to acquire the identifier information of the bootstrap node from the configuration information; and a sending unit configured to send a configuration update request to the bootstrap node according to the identifier information, wherein the configuration information is carried in the configuration update request.

According with another aspect of the disclosure, there is provided another issuing system for configuration information, which comprises: a configuration server and a peer node serving as a bootstrap node in a P2P network, wherein the bootstrap node comprises: a first sending module configured to periodically send a configuration information acquisition request to the configuration server according to a predetermined period; a first receiving module configured to receive the configuration information returned by the configuration server; a judging module configured to judge whether or not the configuration information received by the first receiving module is newer than the local configuration information of the bootstrap node, wherein if the judgment result is yes, an issuing module is triggered; and the issuing module configured to issue the configuration information received by the first receiving module to other peer nodes except the bootstrap node in the P2P network; and wherein the configuration server comprises: a second receiving module configured to receive the configuration information acquisition request from the bootstrap node; and a second sending module configured to send the configuration information of the configuration server to the bootstrap node.

By the disclosure, after the local configuration information is updated, the configuration server issues the updated configuration information to the bootstrap node in the P2P network, thus avoiding the problem that the new configuration cannot be issued if there is no new node added into the P2P network for a long time after the configuration is modified, thereby realizing that the configuration information of the peer nodes in the P2P network can be synchronized with that of the configuration server in time.

### Brief description of the drawings

The accompanying drawings illustrated herein provide a further understanding of the disclosure and form a part of the disclosure. The exemplary embodiments and the description thereof are used to explain the disclosure without unduly limiting the scope of the disclosure. In the accompanying drawings:
Fig. 1 is a schematic diagram of an existing RELOAD P2P network;
Fig. 2 is a flowchart of issuing a new configuration by a configuration server according to the conventional art;
Fig. 3 is a flowchart of broadcasting a new configuration among peer nodes according to the conventional art;
Fig. 4 is a structure schematic diagram of an issuing system for configuration information according to an embodiment of the disclosure;
Fig. 5A is a structure schematic diagram of an issuing system for configuration information according to Embodiment 1 of the disclosure;
Fig. 5B is a structure schematic diagram of a configuration server according to Embodiment 1 of the disclosure;
Fig. 5C is another structure schematic diagram of a configuration server according to Embodiment 1 of the disclosure;
Fig. 6 is a structure schematic diagram of an issuing system for configuration information according to Embodiment 2 of the disclosure;
Fig. 7 is a flowchart of an issuing method for configuration information according to an embodiment of the disclosure;
Fig. 8 is a flowchart of another issuing method for configuration information according to an embodiment of the disclosure;
Fig. 9 is a flowchart according to Embodiment 3 of the disclosure;
Fig. 10 is a flowchart according to Embodiment 4 of the disclosure;
Fig. 11 is a flowchart according to Embodiment 5 of the disclosure;
Fig. 12 is a flowchart according to Embodiment 6 of the disclosure; and
Fig. 13 is a flowchart according to Embodiment 7 of the disclosure.

### Detailed description of the embodiments

The disclosure will be described hereinafter in detail with reference to the accompanying drawings and in conjunction with embodiments. It should be noted that the embodiments of the present application and the features in the embodiments can be combined with each other if there is no conflict.

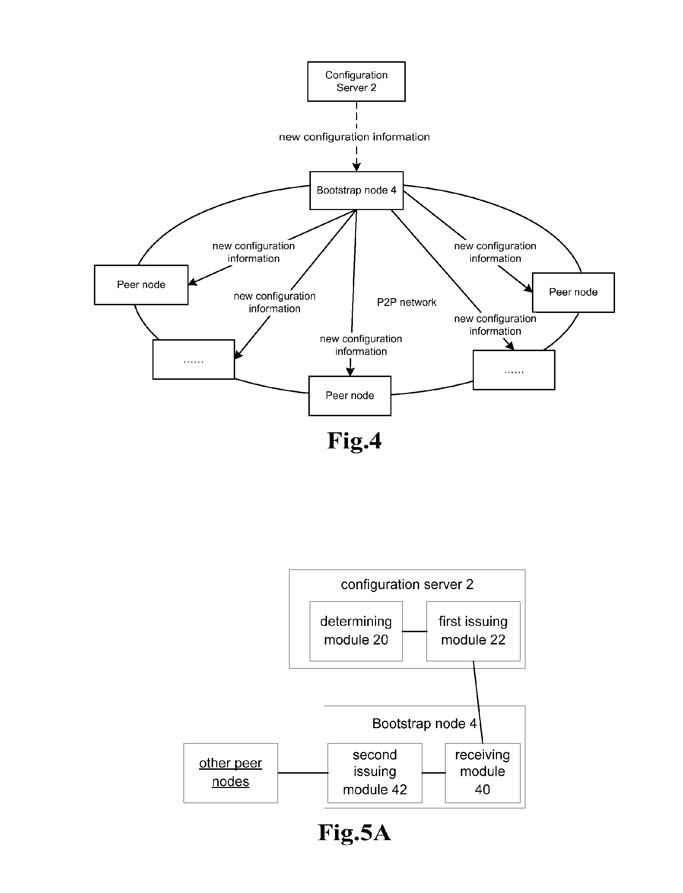

Fig. 4 is a structure schematic diagram of an issuing system for configuration information according to an embodiment of the disclosure. As shown in Fig. 4, the system mainly comprises: a configuration server 2 and a peer node serving as a bootstrap node 4 in a P2P network, wherein the configuration server 2 is configured to issue the modified configuration information of the P2P network to the bootstrap node 4 in the P2P network; and the bootstrap node 4 is configured to receive the configuration information sent by the configuration server and to issue the configuration information to peer nodes other than the bootstrap node 4 in the P2P network.

In the specific implementation process, if there are multiple bootstrap nodes in the P2P network, the configuration server may send the updated configuration information to one of the multiple bootstrap nodes and may send the updated configuration information to several of the multiple bootstrap nodes, which is not limited in the specific embodiment of the disclosure.

In the embodiments of the disclosure, the above-mentioned issuing system for configuration information may be realized in two methods, which are described in the following specific embodiments.

### Embodiment 1

Fig. 5A is a structure schematic diagram of an issuing system for configuration information according to this embodiment. As shown in Fig. 5A, in this embodiment, a configuration server 2 mainly comprises: a determining module 20 and a first issuing module 22, and a bootstrap node 4 mainly comprises: a receiving module 40 and a second issuing module 42. The configuration server 2 and the bootstrap node 4 are respectively described below.

The configuration server 2 comprises: a determining module 20 configured to determine that the configuration information of a P2P network is modified and to trigger the first issuing module 22, wherein since the configuration information of the P2P network is provided by the configuration server in the specific application, the determining module 20 is configured to judge whether or not the configuration information of the configuration server is modified, wherein the judgment result is yes, a first issuing module 22 is triggered; and the first issuing module 22 configured to send the modified configuration information to the bootstrap node 4.

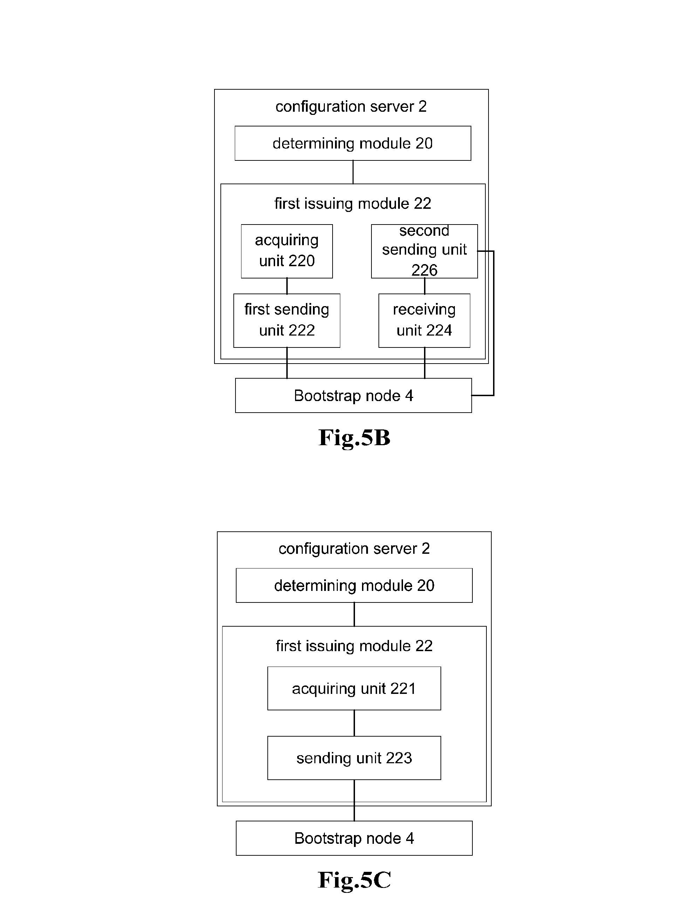

In the specific application, when the configuration information is modified, the first issuing module 22 may send a notification message to the bootstrap node 4 first, and then send the new configuration information to the bootstrap node 4 when receiving a request from the bootstrap node 4, or the first issuing module 22 may still directly send the new configuration information to the bootstrap node 4. Therefore, the first issuing module 22 may comprise, but be not limited to, the structure shown in Fig. 5B or 5C.

As shown in Fig. 5B, the first issuing module 22 may comprise: an acquiring unit 220 configured to acquire the identifier information of the bootstrap node from the configuration information, wherein the identifier information (e.g. node ID) of the bootstrap node is set in the configuration information of the configuration server in the specific implementation process, therefore, the acquiring unit 220 may acquire the identifier information of the bootstrap node 4 from the configuration information, moreover, if there are multiple bootstrap nodes in the P2P network, the acquiring unit 220 may acquire the identifier information of one or several of the bootstrap nodes; a first sending unit 222 configured to send a notification message to the bootstrap node 4 according to the identifier information to notify the bootstrap node 4 that the configuration information has been updated; a receiving unit 224 configured to receive a configuration information acquisition request returned by the bootstrap node 4 and to trigger a second sending unit 226; and the second sending unit 226 configured to send the configuration information to the bootstrap node 4.

Alternatively, as shown in Fig. 5C, the first issuing module 22 may comprise: an acquiring unit 221 and a sending unit 223, wherein the acquiring unit 221 is configured to acquire the identifier information of the bootstrap node 4 from the configuration information; and the sending unit 223 is configured to send a configuration update request to the bootstrap node 4 according to the identifier information, wherein the configuration information is carried in the configuration update request.

The bootstrap node 4 may comprise: a receiving module 40 and a second issuing module 42, wherein the receiving module 40 is configured to receive the configuration information from the configuration server 2; and the second issuing module 42 is configured to issue the configuration information received by the receiving module to peer nodes other than the bootstrap node in the P2P network 4.

In the specific application, since the configuration server 2 sends the modified configuration information to the bootstrap node 4 after determining that the configuration information is modified, the configuration information received by the receiving module 40 is definitely newer than the local configuration information of the bootstrap node 4. Thereby, after receiving the configuration information from the configuration server 2, the bootstrap node 4 will update the local configuration information with the received configuration information, namely, the bootstrap node 4 will replace the local configuration information with the received configuration information.

### Embodiment 2

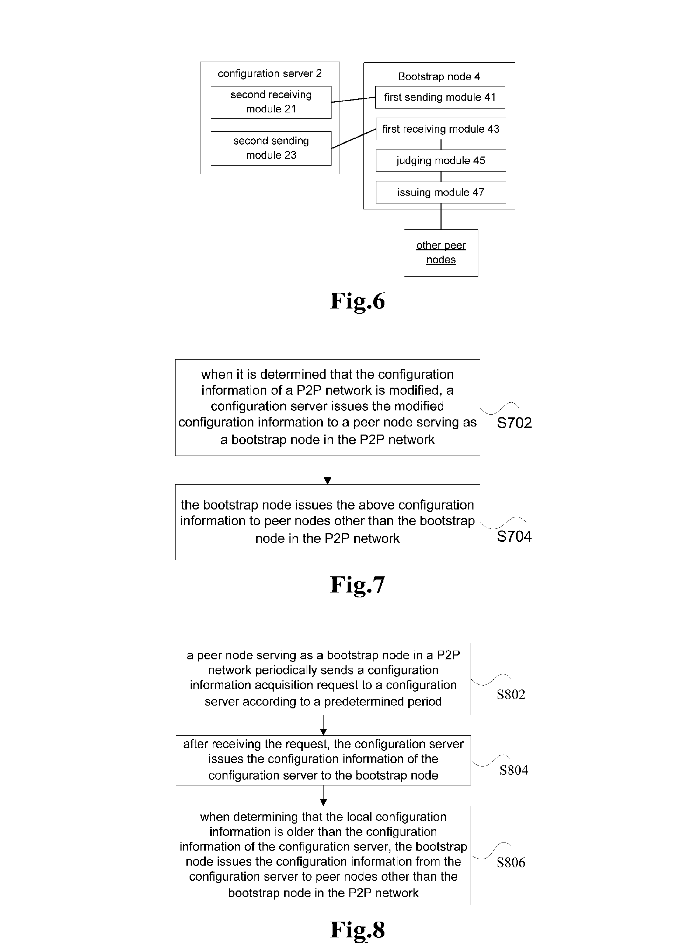

Fig. 6 is a structure schematic diagram of an issuing system for configuration information according to this embodiment. As shown in Fig. 6, in this embodiment, a bootstrap node 4 comprises: a first sending module 41, a first receiving module 43, a judging module 45 and an issuing module 47, and a configuration server 2 comprises: a second receiving module 21 and a second sending module 23.

The bootstrap node 4 and the configuration server 2 are respectively described below.

The bootstrap node 4 comprises: a first sending module 41, a first receiving module 43, a judging module 45 and an issuing module 47, wherein the first sending module 41 is configured to periodically send a configuration information acquisition request to the configuration server 2 according to a predetermined period, and in the specific application, a timer, the duration of which is as long as the predetermined period, may be set to calculate the period, wherein the first sending module 41 is triggered and the timer is restarted when the timer expires; the first receiving module 43 is configured to receive the configuration information returned from the configuration server 2; the judging module 45 is configured to judge whether or not the configuration information received by the first receiving module 43 is newer than the local configuration information of the bootstrap node 2, wherein if the judgment result is yes, the issuing module 47 is triggered, otherwise, the received configuration information is abandoned, and in the specific application, it may be judged whether or not the received configuration information is newer than the local configuration information according to the sequence numbers of the configuration information, moreover, if the received configuration information is newer than the local configuration information, the local configuration information will be updated with the received configuration information, namely, the local configuration information will be replaced by the received configuration information; and the issuing module 47 is configured to issue the configuration information received by the first receiving module 43 to peer nodes other than the bootstrap node 4 in the P2P network.

The configuration server 2 comprises: a second receiving module 21 and a second sending module 23, wherein the second receiving module 21 is configured to receive a configuration information acquisition request from the bootstrap node 4; and the second sending module 23 is configured to send the configuration information of the configuration server 2 to the bootstrap node 4.

In above Embodiments 1 and 2, when the second issuing module 42 or the issuing module 47 issues the configuration information to peer nodes other than the bootstrap node 4 in the P2P network, a broadcast manner may be used to issue the configuration information to all the peer nodes , or when the second issuing module 42 or the issuing module 47 exchanges messages with another peer node, the new configuration information is issued to the opposite end of exchanging messages, and then the peer node receiving new configuration information issues the new configuration information out when interacting with the another peer node.

According with the above system, after the configuration of the configuration server is modified, the new configuration can be issued in the P2P network in time, without waiting for the addition of a new node, thus avoiding the problem that new configuration cannot be issued if there is no new node added into the P2P network for a long time after the configuration is modified.

The issuing methods for configuration information provided in embodiments of the disclosure are described below, wherein the methods may be realized by the above systems.

Considering the problem existing in the conventional art that the new configuration is issued only when there is a new node added into the P2P network after the configuration of a configuration server is modified, which results in that the new configuration information cannot be issued if there is no new node added into the P2P network for a long time after the configuration is modified, issuing methods for new configuration information are provided in this embodiment. The basic idea of the disclosure lies in that: after the configuration information of a configuration server is modified, the new configuration information is first issued to the bootstrap nodes (namely, some of peer nodes in a P2P network) of a P2P network from the configuration server, and then is transmitted to all the peer nodes in the network from the some of peer nodes. As for the above idea, there are provided two issuing methods for configuration information in this embodiment of the disclosure, which are respectively described below.

Fig.7 is a flowchart of an issuing method for configuration information according to this embodiment. As shown in Fig.7, the issuing method for configuration information mainly comprises the following steps (Step 702-Step 704).

Step 702: when it is determined that the configuration information of a P2P network is modified, a configuration server issues the modified configuration information to a peer node serving as a bootstrap node in the P2P network.

In the specific implementation process, the configuration server issues the modified configuration to the bootstrap node in, but is not limited to, the following methods:
Method 1: after configuration information of the configuration server is modified, the configuration server notifies the bootstrap node that the configuration has been modified, and then the bootstrap node acquires the new configuration from the configuration server, which is described in detail in the following Embodiment 3.
Method 2: after configuration information of the configuration server is modified, the configuration server directly sends the new configuration to the bootstrap node, which is described in detail in the following Embodiment 4.

Step 704: the bootstrap node issues the above configuration information to peer nodes other than the bootstrap node in the P2P network.

In the specific implementation process, the bootstrap node may issue the configuration information to each of peer nodes in the P2P network in a broadcast manner, or the bootstrap node may issue the configuration information to the peer node of the opposite end when exchanging messages with another peer node, which is described in detail in the following Embodiments 5 and 6.

By the above-mentioned method provided in this embodiment, when the configuration of the configuration server is modified, the configuration server is triggered to send the modified configuration information to the bootstrap node in the P2P network, and then the bootstrap node issues the new configuration information to other peer nodes in the P2P network, thus the modified configuration information can be issued in the P2P network in time, without waiting for the addition of a new node, thereby realizing that the configuration information of the peer nodes in the P2P network can be synchronized with that of the configuration server in time.

Fig. 8 is a flowchart of another issuing method for configuration information according to this embodiment. As shown in Fig. 8, the method mainly comprises the following steps (Step 802-Step 806).

Step 802: a peer node serving as a bootstrap node in a P2P network periodically sends a configuration information acquisition request to a configuration server according to a predetermined period.

In the specific implementation process, timing is conducted with the predetermined period by setting a timer. The bootstrap node sends the request to the configuration server when the timer expires.

Step 804: after receiving the request, the configuration server issues the configuration information of the configuration server to the bootstrap node.

Step 806: when determining that the local configuration information is older than the configuration information of the configuration server, the bootstrap node issues the configuration information from the configuration server to peer nodes other than the bootstrap node in the P2P network.

In Step 806: if determining that the local configuration information is older than the configuration information of the configuration server, the bootstrap node further replaces the local configuration information with the received configuration information.

Moreover, when issuing the new configuration information to other peer nodes in the P2P network, the bootstrap node may send in a broadcast manner, as descried in Embodiment 6; or when another peer node transmits a message to the bootstrap node, wherein the current configuration sequence number of the peer node is contained in the message, the bootstrap node checks the configuration sequence number contained in the message after receiving the request message, and determines that the opposite end uses an old configuration to be updated if the configuration sequence number contained in the message is smaller than the local configuration sequence number, and then sends the new configuration to the opposite end through a configuration update message. In addition, the node obtaining the new configuration may further send the new configuration information to other peer nodes in this way, and so on and so forth, all the peer nodes can obtain the new configuration, which is described in Embodiment 7.

By the issuing methods for configuration information provided in this embodiment of the disclosure, the bootstrap node may acquire the configuration of the configuration server periodically, without waiting for the addition of a new node, thus avoiding the problem that new configuration cannot be issued if there is no new node added into the P2P network for a long time after the configuration is modified.

The issuing methods for configuration information provided in the embodiments of the disclosure are described below with the RELOAD P2P network shown in Fig. 1 as an example.

### Embodiment 3

The first method for a configuration server to issue new configuration information is described in this embodiment, in which after the configuration of the configuration server is modified, the configuration server is required to issue the modified configuration to some of peer nodes (bootstrap nodes) in the following specific way: after configuration information of the configuration server is modified, the configuration server notifies a bootstrap node D that the configuration has been modified, and then the bootstrap node D acquires the new configuration from the configuration server.

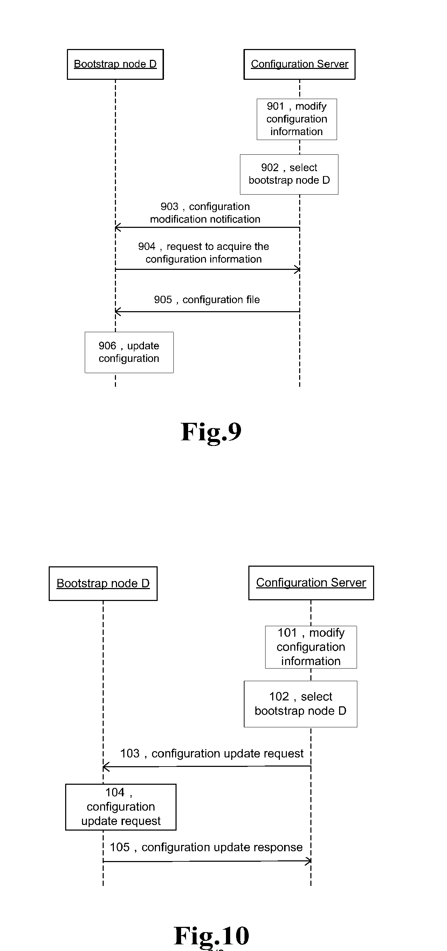

Fig. 9 is a flowchart of sending the new configuration information from the configuration server to the bootstrap node according to this embedment. As shown in Fig. 9, the flow mainly comprises the following steps.

Step 901: the configuration information contained in the configuration file of the configuration server is modified.

In the specific application, the configuration is an XML file, the configuration sequence number of which is added by 1 when the configuration is modified, or is reset as 1 if greater than 2^32; synchronously, all the configuration information between <configuration> and </configuration> is signed, and attaches the signature information to the configuration file. The signed configuration file cannot be arbitrarily modified; otherwise the original integrity will be destroyed.

Step 902: the configuration server acquires a bootstrap node list from the configuration file thereof, and arbitrarily selects (or specially selects, or selects according to another strategy, no specific related limitation is given here) a bootstrap node from the bootstrap node list.

Step 903: the configuration server sends a configuration modification notification to the selected bootstrap node D.

In the specific application, existing RELOAD protocol may be expanded to add a notification message which comprises the sequence number of the new configuration.

Step 904: after receiving the configuration modification notification, the bootstrap node D acquires the configuration sequence number from the received configuration modification notification, and compares the configuration sequence number contained in the received configuration modification notification with the local configuration sequence number, wherein if finding the configuration in the notification is a new one, an HTTP GET request will be sent to an appointed configuration server to request to acquire the configuration information.

Step 905: the configuration server returns an XML configuration file.

Step 906: the bootstrap node D replaces the local old configuration information with the new configuration information.

In this way, the bootstrap node D obtains the latest configuration, therefore the bootstrap node D can provide the latest configuration information to other peer nodes in the network.

### Embodiment 4

The second method for a configuration server to issue new configuration information is described in this embodiment, in which after the configuration of the configuration server is modified, the configuration server is required to issue the modified configuration to some of peer nodes in the following way: the configuration server directly sends the new configuration to a bootstrap node D after the configuration modification notification message mentioned in the above-described first method is combined with a configuration content message, namely, after the configuration information of the configuration server is modified.

Fig. 10 is a flowchart according to this embodiment. As shown in Fig.10, the flow mainly comprises the following steps.

Step 101: the configuration of the configuration server is modified.

In the specific implementation process, the configuration is an XML file, the configuration sequence number of which must be added by 1 when the configuration is modified, or is reset as 1 if greater than 2^32; synchronously, all the configuration information between <configuration> and </configuration> is signed, and attaches the signature information to the configuration file.

Step 102: the configuration server acquires a bootstrap node list from the configuration file thereof, and arbitrarily selects (or specially selects, or selects according to another strategy) a bootstrap node D from the bootstrap node list.

Step 103: the configuration server sends a configuration update request to the bootstrap node D, wherein the new configuration information is carried in the configuration update request.

In the specific implementation process, existing RELOAD protocol may be expanded to add a message for the configuration server to send configuration, wherein the message body of the message may be the same with that of a message for the configuration update between peer nodes, or be formed referring thereto.

Step 104: after receiving the new configuration information, the bootstrap node D replaces the local old configuration information with the new configuration information to update the local configuration.

In this way, the bootstrap node D obtains the latest configuration, therefore the bootstrap node D can provide the latest configuration information to other peer nodes in the network.

Step 105: the bootstrap node B returns a configuration update response to the configuration server.

### Embodiment 5

The flow of the method shown in Fig. 8 for the bootstrap node to acquire the configuration information of the configuration server is described in this embodiment, in which after the configuration information of the configuration server is modified, the modified configuration information waits for being acquired by the bootstrap node, and the bootstrap node periodically acquires the new configuration from the configuration server.

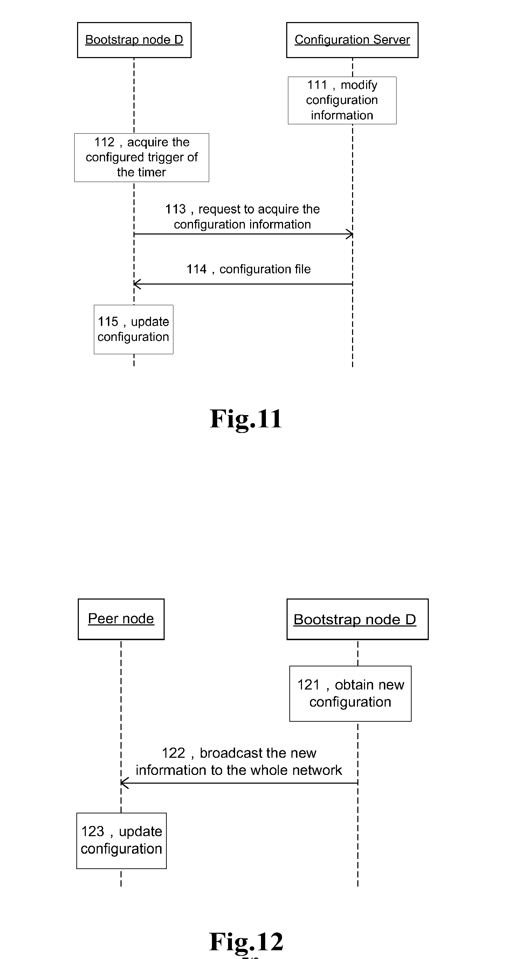

As shown in Fig. 11, the step of acquiring the configuration information of the configuration server by the bootstrap node mainly comprises the following steps.

Step 111: the configuration of the configuration server is modified.

As stated above, in the specific implementation process, the configuration is an XML file, the configuration sequence number of which must be added by 1 when the configuration is modified, or is reset as 1 if greater than 2^32; synchronously, all the configuration information between <configuration> and </configuration> is signed, and attached the signature information to the configuration file.

Step 112: the bootstrap node D presets a cycle timer to periodically trigger a configuration acquisition task at a preset interval.

Step 113: after the timer is triggered, the configuration acquisition task of the bootstrap node D sends an HTTP GET request to an appointed configuration server to request to acquire the configuration information.

Step 114: the configuration server returns an HTTP GET response in which the XML configuration file is carried.

Step 115: the bootstrap node D analyzes the XML configuration file, and updates the local configuration by replacing the local old configuration with the configuration from the configuration server.

In this way, the bootstrap node D obtains the latest configuration, therefore the bootstrap node D can provide the latest configuration information to other peer nodes in the network.

### Embodiment 6

In this embodiment, after acquiring the new configuration, the bootstrap node sends the new configuration to other peer nodes in the network in a broadcast manner.

Fig. 12 is a flowchart of transmitting the new configuration from the bootstrap node to other peer nodes in the network according to this embedment. As shown in Fig. 12, the flow mainly comprises the following steps.

Step 121: the bootstrap node D obtains the new configuration.

Step 122: the bootstrap node D broadcasts the new configuration to the whole network.

In the specific application, the main body of the broadcasted message may be formed referring to existing configuration update message in an RELOAD or is the same therewith, and the information (e.g. packet broadcast range) needed by some broadcasting algorithm is added, wherein the broadcasting technology may adopt a group recursion or others broadcasting technology, for example, broadcast groups are divided according to a routing table, and broadcast subgroups are further divided in each broadcast group according to the routing table until a message is broadcasted to all peer nodes, which is not specifically limited in the embodiment of the disclosure.

Step 123, after receiving the new configuration, the peer node in the network checks the configuration sequence number contained in the new configuration, and updates the local configuration with the new configuration if meeting two conditions, wherein the two conditions are the configuration sequence number contained in the new configuration is greater than that of the local configuration and the signature of the new configuration is correct.

In this way, the latest configuration information is broadcasted to all the peer nodes in the network from the bootstrap node D.

### Embodiment 7

In this embodiment, after acquiring new configuration, the bootstrap node checks the configuration sequence number contained in a request message when another peer node (node A here) sends the request message to the bootstrap node D, wherein if it is found that the configuration sequence number in the request is smaller than the local configuration sequence number (the configuration sequence number of the request party is carried in the request message), the local configuration information will be sent to node A, in this way, the node A obtains the new configuration from the node D, and so on and so forth, the new configuration is broadcasted to all the peer nodes in the whole network.

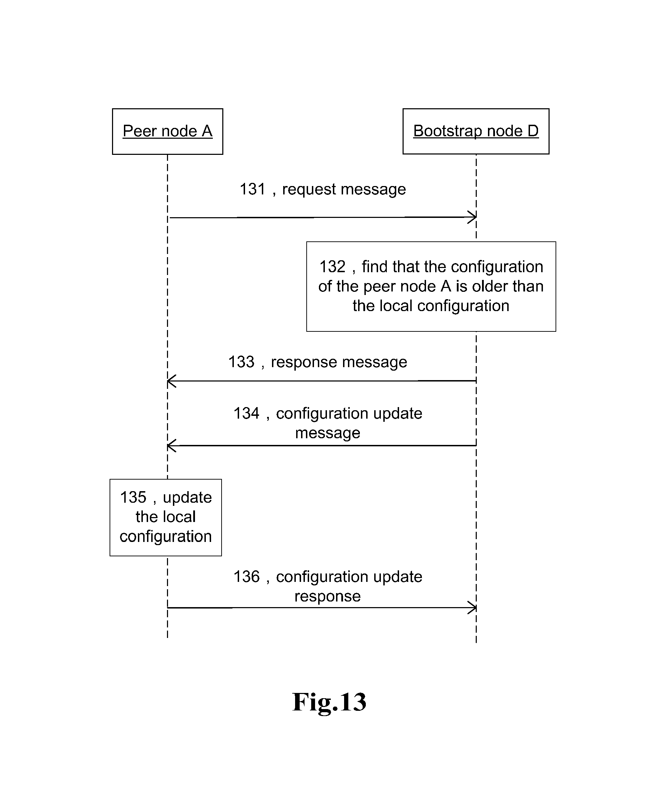

Fig. 13 is a flowchart of broadcasting method for a new configuration according to this embodiment. As shown in Fig. 13, the flow mainly comprises the following steps.

Step 131: the peer node A sends a request message to the peer node D, wherein the request message, which may be any message in an RELOAD, carries a configuration sequence number in the message forwarding head thereof.

Step 132: after receiving the message from the node A, the peer node D checks the configuration sequence number contained in the message, wherein if the configuration sequence number contained in the message is smaller than that of the present node, it is determined that the configuration of the node A is old and needs updating.

Step 133: the peer node D returns a message response (e.g. the message response may be Error_Config_Too_Old) to the node A to prompt the node A that the configuration is not new.

Step 134: the peer node D sends the configuration information thereof to the node A through a configuration update message.

Step 135: after receiving the configuration update message of the node D, the peer node A checks the configuration sequence number contained in the configuration update message and updates the local configuration if the configuration sequence number contained in the configuration update message is newer than the local configuration sequence number or is equal to Oxffff (compulsion update).

Step 136: the peer node A returns a configuration update response to the node D.

In this way, the latest configuration information is broadcasted from the bootstrap node D to the peer node A. The peer node A may broadcast the new configuration information to peer nodes in the same way. Finally, all the peer nodes in the network can obtain the new configuration.

It can be seen from the description above that in embodiments of the disclosure, after configuration information of the configuration server is updated, the configuration server issues the updated configuration information to the bootstrap node in the P2P network, or the bootstrap node acquires configuration periodically from the configuration server, thus avoiding the problem that the new configuration cannot be issued if there is no new node added into the P2P network for a long time after the configuration is modified, thereby realizing that the configuration information of the peer nodes in the P2P network can be synchronized with that of the configuration server in time.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, moreover, in some situation, they can be executed the showed or described steps in an order different from this illustrated therein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall cover any modification, equivalent substitution and improvement within the spirit and principle of the present invention.

## Claims

1. An issuing method for configuration information, **characterized by** comprising:
a configuration server issuing the modified configuration information to a peer node which serves as a bootstrap node in a Peer-to-Peer (P2P) network when it is determined that the configuration information of the P2P network is modified; and
the bootstrap node issuing the configuration information to peer nodes other than the bootstrap node in the P2P network.

2. The method according to claim 1, **characterized in that** the step of the configuration server issuing the configuration information to the bootstrap node comprises:
the configuration server acquiring the identifier information of the bootstrap node from the configuration information; and
the configuration server issuing the configuration information to the bootstrap node in the P2P network according to the identifier information.

3. The method according to claim 2, **characterized in that** the step of the configuration server issuing the configuration information to the bootstrap node in the P2P network comprises:
the configuration server sending a notification message to the bootstrap node to notify the bootstrap node that the configuration information has been updated;
after receiving the notification message, the bootstrap node sending a configuration information acquisition request to the configuration server; and
after receiving the request, the configuration server sending the configuration information to the bootstrap node.

4. The method according to claim 2, **characterized in that** the step of the configuration server issuing the configuration information to the bootstrap node comprises:
the configuration server sending a configuration update request to the bootstrap node, wherein the configuration information is carried in the configuration update request.

5. The method according to claim 1, **characterized in that** the step of the bootstrap node issuing the configuration information to the other peer nodes comprises:
the bootstrap node sending the configuration information to the other peer nodes in a broadcast manner.

6. The method according to claim 1, **characterized in that** the step of the bootstrap node sending the configuration information to the other peer nodes comprises:
the bootstrap node receiving messages from the other peer nodes, wherein the sequence numbers of the local configuration information of the other peer nodes are carried in the messages; and
the bootstrap node determining, according to the sequence numbers, that the local configuration information of the other peer nodes needs to be updated, and then sending a configuration update message to the other peer nodes, wherein the configuration information from the configuration server is carried in the configuration update message.

7. An issuing method for configuration information, **characterized by** comprising:
a peer node which serves as a bootstrap node in a P2P network periodically sending a configuration information acquisition request to a configuration server according to a predetermined period;
after receiving the request, the configuration server sending the configuration information of the configuration server to the bootstrap node; and
when determining that the local configuration information is older than the configuration information from the configuration server, the bootstrap node issuing the configuration information from the configuration server to peer nodes other than the bootstrap node in the P2P network.

8. The method according to claim 7, **characterized in that** the step of the bootstrap node issuing the configuration information from the configuration server to the other peer nodes comprises:
the bootstrap node issuing the configuration information from the configuration server to the other peer nodes in a broadcast manner.

9. The method according to claim 7, **characterized in that** the step of the bootstrap node issuing the configuration information from the configuration server to the other peer nodes comprises:
the bootstrap node receiving messages from the other peer nodes, wherein the sequence numbers of the local configuration information of the other peer nodes are carried in the messages; and
the bootstrap node determining, according to the sequence numbers, that the local configuration information of the other peer nodes needs to be updated, and then sending a configuration update message to the other peer nodes, wherein the configuration information from the configuration server is carried in the configuration update message.

10. An issuing system for configuration information, **characterized by** comprising: a configuration server and a peer node serving as a bootstrap node in a P2P network, wherein
the configuration server comprises:
a determining module configured to determine that the configuration information of the P2P network is modified and to trigger a first issuing module; and
the first issuing module configured to send the modified configuration information to the bootstrap node;
and wherein the bootstrap node comprises:
a receiving module configured to receive the configuration information from the configuration server; and
a second issuing module configured to issue the configuration information received by the receiving module to peer nodes other than the bootstrap node in the P2P network.

11. The system according to claim 10, **characterized in that** the first issuing module comprises:
an acquiring unit configured to acquire the identifier information of the bootstrap node from the configuration information;
a first sending unit configured to send according to the identifier information a notification message to the bootstrap node to notify the bootstrap node that the configuration information has been updated;
a receiving unit configured to receive a configuration information acquisition request returned by the bootstrap node and to trigger a second sending unit; and
the second sending unit configured to send the configuration information to the bootstrap node.

12. The system according to claim 10, **characterized in that** the first issuing module comprises:
an acquiring unit configured to acquire the identifier information of the bootstrap node from the configuration information; and
a sending unit configured to send a configuration update request to the bootstrap node according to the identifier information, wherein the configuration information is carried in the configuration update request.

13. An issuing system for configuration information, **characterized by** comprising: a configuration server and a peer node serving as a bootstrap node in a P2P network, wherein
the bootstrap node comprises:
a first sending module configured to periodically send a configuration information acquisition request to the configuration server according to a predetermined period
a first receiving module configured to receive the configuration information returned by the configuration server;
a judging module configured to judge whether or not the configuration information received by the first receiving module is newer than the local configuration information of the bootstrap node, wherein if the judgment result is yes, an issuing module is triggered; and
the issuing module configured to issue the configuration information received by the first receiving module to peer nodes other than the bootstrap node in the P2P network;
and wherein the configuration server comprises:
a second receiving module configured to receive the configuration information acquisition request from the bootstrap node; and
a second sending module configured to send the configuration information of the configuration server to the bootstrap node.
